(19) Europäisches Patentamt / European Patent Office / Office européen des brevets

(11) **EP 4 360 247 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(21) Anmeldenummer: **22740771.5**

(22) Anmeldetag: **23.06.2022**

(51) Internationale Patentklassifikation (IPC):
$H04L\ 9/00^{(2022.01)}$    $H04L\ 9/30^{(2006.01)}$
$G06F\ 21/75^{(2013.01)}$    $G06F\ 7/72^{(2006.01)}$
$G06F\ 7/76^{(2006.01)}$    $H04W\ 12/47^{(2021.01)}$
$G09C\ 1/00^{(2006.01)}$

(52) Gemeinsame Patentklassifikation (CPC):
**G06F 21/755; G06F 7/72; G06F 7/764; G09C 1/00; H04L 9/003; H04L 9/3066; H04W 12/47; G06F 2207/7233**

(86) Internationale Anmeldenummer:
**PCT/EP2022/025288**

(87) Internationale Veröffentlichungsnummer:
**WO 2022/268364 (29.12.2022 Gazette 2022/52)**

(54) **VERFAHREN ZUR BERECHNUNG EINES ÜBERGANGS VON EINER BOOLESCHEN ZU EINER ARITHMETISCHEN MASKIERUNG**

METHOD FOR CALCULATING A TRANSITION FROM A BOOLEAN MASKING TO AN ARITHMETIC MASKING

PROCÉDÉ DE CALCUL D'UNE TRANSITION D'UN MASQUAGE BOOLÉEN À UN MASQUAGE ARITHMÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2021 DE 102021003275**

(43) Veröffentlichungstag der Anmeldung:
**01.05.2024 Patentblatt 2024/18**

(73) Patentinhaber: **Giesecke+Devrient ePayments GmbH**
**81677 München (DE)**

(72) Erfinder: **HOFFMANN, Lars**
**80639 München (DE)**

(74) Vertreter: **Giesecke+Devrient IP**
**Prinzregentenstraße 161**
**81677 München (DE)**

(56) Entgegenhaltungen:
FR-A1- 2 999 747        US-A1- 2015 110 266
US-A1- 2015 172 042

- GOUBIN L ED - KOC C K ET AL: "A SOUND METHOD FOR SWITCHING BETWEEN BOOLEAN AND ARITHMETIC MASKING", CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS; [LECTURE NOTES IN COMPUTER SCIENCE], BERLIN : SPRINGER, DE, vol. 2162, 14 May 2001 (2001-05-14), pages 3 - 15, XP008002644, ISBN: 978-3-540-42521-2

**Beschreibung**

Gebiet der Erfindung

Die Erfindung betrifft das Gebiet der Kryptographie und spezieller das Gebiet des Ausspähungsschutzes von kryptographischen Berechnungen. Insbesondere betrifft die Erfindung den Übergang von einer ersten Maskierung eines geheim zu haltenden Wertes, die auf einer booleschen Maskierungsregel beruht, zu einer zweiten Maskierung des geheim zu haltenden Wertes, die auf einer arithmetischen Maskierungsregel beruht. Besonders eignet sich die Erfindung zur Verwendung bei einem ressourcenbeschränkten System, beispielsweise einer Chipkarte, wie einer Zahlungsverkehrskarte oder einem zum Betrieb in einem Mobilfunk-Terminal vorgesehenen UICC (Mobilfunk-SIM-Karte), oder einem zum Festeinbau in ein Mobilfunk-Terminal vorgesehenen SIM-Chipmodul eUICC (embedded UICC), oder einem zur Integration in ein Chipset eines Mobilfunk-Terminals vorgesehenen integrated iUICC oder Integrated SIM-Chipmoduls. Das Mobilfunk-Terminal kann dabei beispielsweise ein Smartphone oder Mobiltelefon sein, oder ein Internetder-Dinge-Gerät, IdD-Geräte (IoT device), oder eine M2M-Gerät, insbesondere ein Industrie-M2M-Gerät (mit ressourcenbeschränktes Modul: M2M-(e)UICC-Modul) oder eine Automobil-M2M-Telematikeinheit (mit ressourcenbeschränktes Modul: M2M-(e)UICC-Modul).

Stand der Technik

In SPA- und DPA-Angriffen (SPA = Simple Power Analysis, DPA = Differential Power Analysis) auf kryptographische Berechnungen werden Seitenkanalabstrahlungen von Implementierungen kryptographischer Berechnungen ausgewertet, beispielsweise Stromverbrauch oder elektromagnetische Abstrahlung des Chips, auf dem die Berechnung implementiert ist, um auf in der Berechnung verarbeitete geheime Daten Rückschlüsse zu ziehen. Um SPA- und DPA-Angriffe auf kryptographische Berechnungen abzuwehren, werden die geheim zu haltenden Daten, die in einer kryptographischen Berechnung verarbeitet werden, vor der Ausführung von kryptographischen Berechnungen maskiert, also mit einem als Maske bezeichneten Wert verfälscht.

Eine Maskierung eines geheim zu haltenden Wertes kann auf unterschiedlichen Maskierungsregeln beruhen. Die Maskierungsregel gibt die Rechenvorschrift an, gemäß der die zu schützenden Daten mit der Maske verknüpft werden, um die maskierte Repräsentation der zu schützenden Daten zu erhalten. Welche Maskierungsregel geeignet oder am besten geeignet ist, hängt von der Art der kryptographischen Berechnung ab, sowie von den einzelnen Operationen oder Teilberechnungen, die innerhalb der Gesamtheit der kryptographischen Berechnung abzuarbeiten sind.

Dabei können Fälle auftreten, in denen innerhalb der Gesamtheit einer kryptographischen Berechnung nacheinander Operationen oder Teilberechnungen ausgeführt werden, bei denen unterschiedlichen Maskierungsregeln vorteilhafter sind, oder die sogar nur mit unterschiedlichen Maskierungsregeln verträglich sind. In solchen Fällen, ist es wünschenswert oder erforderlich, dass in der Gesamtheit kryptographischen Berechnung ein Übergang zwischen zwei unterschiedlichen Maskierungsregeln durchgeführt wird.

Das Dokument WO 02/065692 A1 aus dem Stand der Technik offenbart ein Verfahren zum Übergang zwischen einer booleschen xor-Verknüpfung mit einer Zufallszahl r als erster Maskierungsregel und einer zweiten, additiven (arithmetischen) Maskierungsregel, wobei um den Übergang von der booleschen zur additiven Maskierungsregel zu erwirken, eine Sequenz von booleschen und arithmetischen Operationen durchgeführt wird.

Das Dokument EP1596527 Bl aus dem Stand der Technik offenbart ein Verfahren zum ausspähungsgeschützten Übergang von einer ersten Maskierung eines geheim zu haltenden Wertes d zu einer zweiten Maskierung des geheim zu haltenden Wertes d, wobei der geheim zu haltende Wert d: - in der ersten Maskierung als eine gemäß einer booleschen Maskierungsregel $ds = d \text{ XOR } s$ mit einer ersten Maske s maskierte erste Repräsentation ds vorliegt, und - in der zweiten Maskierung als eine gemäß einer arithmetischen Maskierungsregel $dr = (d + r) \bmod (2^n)$ mit einer zweiten Maske r maskierte zweite Repräsentation dr vorliegt, wobei r so berechnet wird, dass ds = dr gilt. EP1596527 Bl offenbart genauer als konkrete Ausgestaltung der Erfindung eine erste Maskierung $d = d \text{ XOR } z1$ und eine zweite Maskierung $d = d - z2 \bmod 2^n$. Beim Wechsel von der ersten zu zweiten Maske wird nur die Maskierung geändert, nicht aber die damit maskierte Berechnung.

Das Dokument BSI-TR-03111 beschreibt eine Umsetzung des PACE-Protokolls zur Authentisierung zwischen einem maschinenlesbaren Dokument als Client und einem Terminal zum Auslesen des Chips eines solchen maschinenlesbaren Reisedokuments. Beim PACE Protokoll werden mittels eine Schlüsselableitungsfunktion KDF zunächst ein geteiltes Geheimnis K und ausgehend vom geteilten Geheimnis K und einem Passwort zwei symmetrische Schlüssel abgeleitet, nämlich ein Verschlüsselungsschlüssel Kenc und ein Authentisierungsschlüssel Kmac. Die Schlüsselableitungsfunktion KDF ist beispielsweise ein Diffie-Hellman (DH) oder Elliptische Kurven Diffie-Hellman (ECDH) Schlüsselableitungsverfahren, in welches asymmetrische Schlüsselpaare des Client und des Terminal eingehen. Bei den Verfahren werden Berechnungen modulo eines Modulus ausgeführt, welcher mindestens einen Primteiler ungleich zwei besitzt.

In der deutschen Patentanmeldung DE102020000814A1 der Anmelderin der vorliegenden Anmeldung ist ein ausspähungsgeschütztes Verfahren zur Schlüsselgenerierung offenbart, eingerichtet in einer Client-Prozessoreinrichtung, mittels dessen ein zweiter öffentlicher Client-Schlüssel $P_c$' des Client abgeleitet wird. Der Client ist insbesondere ein maschinenlesbares Reisedokument. Das Verfahren zur Schlüsselgenerierung ist insbesondere Teil eines PACE-Protokolls oder eines vergleichbaren Protokolls zur Authentisierung zwischen einem maschinenlesbaren Reisedokument als Client einerseits und einem Terminal zum Auslesen des Chips eines solchen maschinenlesbaren Reisedokuments andererseits. Bei der Authentisierung des PACE-Protokolls wird ein zweites asymmetrisches Schlüsselpaar [$k_c$', $P_c$'] des Client verwendet, das einen zweiten öffentlichen Client-Schlüssel $P_c$' und einen zweiten privaten Client-Schlüssel $k_c$' umfasst, wobei der erste öffentliche Client-Schlüssel $P_c$' gebildet wird als Ergebnis einer Operation, in welche der zweite private Client-Schlüssel $k_c$' und ein Generatorpunkt G auf einer elliptischen Kurve und eine Nonce s eingehen. (Beim herkömmlichen PACE-Protokoll wird der zweite öffentliche Client-Schlüssel $P_c$' gebildet durch Punktmultiplikation $P_c$' = $k_c$'•G' des zweiten privaten Client-Schlüssels $k_c$' mit dem mit einer Mapping-Funktion gemappten Generatorpunkt G' auf der elliptischen Kurve).

Auch für das PACE-Protokoll und das in DE102020000814A1 offenbarte Verfahren für ein verbessertes PACE-Protokoll wäre es wünschenswert, ein Verfahren zum Wechsel von eine booleschen Maskierung zu einer arithmetischen Maskierung zu haben, um die geheimen Parameter des PACE-Protokolls durchgängig zu schützen.

Insbesondere kann es bei Protokollen, welche sich aus symmetrischen und asymmetrischen kryptographischen Verfahren zusammensetzen, vorteilhaft sein, einen Maskenwechsel von Daten modulo $2^n$ zu Daten modulo p durchzuführen, bei denen p einen Primteiler ungleich zwei besitzt. Für diese Protokolle sind die in EP1596527 BI angeführten konkreten Beispiele nicht anwendbar.

Das Dokument US2015/0172042A1 aus dem Stand der Technik offenbart ein Verfahren zur Durchführung einer maskierten modularen Addition, bei der ein Übertrag maskiert verarbeitet wird.

Das Dokument US2015/0110266A1 aus dem Stand der Technik offenbart ein Verfahren umfassend eine Umwandlung von einer arithmetischen Maskierung zu einer Booleschen Maskierung, bei dem ein maskierter Übertrag verarbeitet wird.

Das Dokument DE102004052196A1 aus dem Stand der Technik offenbart ein Verfahren zum ausspähungsgeschützen Ausführen einer Operation auf maskierte Daten, wobei auch ein maskierter Übertrag verarbeitet wird.

Das Dokument DE102017002153A1 aus dem Stand der Technik offenbart ein Verfahren zum ausspähungsgeschützten Übergang von einer booleschen Maskierung eines geheim zu haltenden Wertes zu einer additiven Maskierung.

Der Fachartikel von Goubin, L.: "A Sound Method for Switching between Boolean and Arithmetic Masking; CHES 2001, Lecture Notes in Computer Sciense, vol 2162, Springer-Verlag, 2001, Seiten 3-15, offenbart ein Verfahren zur ausspähungsgeschützten Ummaskierung eines geheim zu haltenden Wertes von einer booleschen Maskierung zu einer arithmetischen Maskierung.

Zusammenfassung der Erfindung

Der Erfindung liegt die Aufgabe zu Grunde, ein Verfahren zum ausspähungsgeschützten Übergang von einer booleschen Maskierung zu einer arithmetischen Maskierung unter Verwendung eines Modulus gleich oder umfassend p zu schaffen, wobei p mindestens einen Primteiler ungleich 2 besitzt. Insbesondere soll ein solches Verfahren angegeben werden, das für Moduli p anwendbar ist, die eine Primzahl größer zwei sind.

Die Aufgabe wird gelöst durch ein Verfahren nach einem der unabhängigen Ansprüche. In jedem der unabhängigen Ansprüche ist das gemeinsame erfinderische Konzept verwirklicht, in den Übergang von der ersten zur zweiten Maskierung einen Übergang von einem ersten Modulus $2^n$ zu einem zweiten Modulus p oder umfassend p zu integrieren. Vorteilhafte Ausgestaltungen der Erfindung sind in den abhängigen Ansprüchen angegeben.

Das Verfahren nach Anspruch 1 ist zur ausspähungsgeschützten Ummaskierung eines geheim zu haltenden Wertes x von einer ersten Maskierung zu einer zweiten Maskierung eingerichtet, durch Durchführung einer Mehrzahl von aufeinanderfolgenden Rechenschritten. Dabei liegt der geheim zu haltende Wert x vor der Durchführung der Mehrzahl von aufeinanderfolgenden Rechenschritte in der ersten Maskierung als eine gemäß einer booleschen Maskierungsregel xs = x XOR s mod $2^n$ mit einer ersten Maske s maskierte erste Repräsentation xs vor. Hierbei ist $2^n$ der Modulus der ersten Maskierungsregel. n ist eine ganze Zahl. Nach der Durchführung der Mehrzahl von aufeinanderfolgenden Rechenschritte liegt der geheim zu haltende Wert x in der zweiten Maskierung als eine gemäß einer arithmetischen Maskierungsregel mit einer zweiten Maske r maskierte zweite Repräsentation xr vor.

Das Verfahren ist dadurch gekennzeichnet, dass:

zum Einen:

$$xr = (x+r) \bmod (2^m *p)$$

oder xr = (x-r) mod ($2^m$ *p) ,
wobei ( $2^m$ *p ) der Modulus der zweiten Maskierungsregel ist und m eine ganze Zahl größer gleich null ist, wobei p mindestens einen Primteiler ungleich 2 besitzt;
und zum Anderen:
bei der Ummaskierung mindestens ein arithmetischer Rechenschritt durchgeführt wird, bei dem ein Übertrag c1 über $2^n$ erzeugt wird, wobei der Übertrag c1 gegen Ausspähung geschützt wird, indem der Übertrag c1 mittels einer Zufallsinformation pm maskiert oder balanciert wird, und in einem nachfolgenden Rechenschritt, in dem der Übertrag c1 zur Verwendung vorgesehen ist, an Stelle des Übertrags der maskierte Übertrag C_pm oder der balancierte Übertrag C verwendet wird.

Bei den in EP1596527 B1 beschriebenen Verfahren sind die in den Berechnungen auftretenden Überträge für das Ergebnis des Maskenwechsels nicht relevant. Dies ist im Falle eines Überganges auf eine Maskierungsregel modulo ($2^m * p$), wobei p mindestens einen Primteiler ungleich 2 besitzt, nicht der Fall. Die auftretenden Überträge liefern deshalb eine Einfallmöglichkeit für Ausspähungsattacken, die bei einem Modulus $2^n$ nicht existieren.

Erfindungsgemäß wird der Übertrag c1 gegen Ausspähung geschützt. Das Schützen des Übertrags erfolgt hierbei entweder durch Maskieren des Übertrags c1 oder Balancieren des Übertrags c1, und nachfolgendes Weiterrechnen mit dem maskierten oder balancierten Übertrag c1, aber nicht mit dem im Klartext (plain) vorliegenden Übertrag c1. Hierdurch wird die durch den nicht-Zweierpotenz-Modulus eröffnete Einfallmöglichkeit auf die durch die Rechenschritte gebildete Berechnung wieder geschlossen.

Der Modulus ($2^m * p$) der zweiten Maskierungsregel ist im Spezialfall m = 0 gleich p, und weiter im Spezialfall eine Primzahl ungleich 2. Im allgemeineren Fall, für andere Werte von m, beispielsweise m = 1, 2, 3, 4, 5, ..., enthält der Modulus ein Produkt aus einer Zweierpotenz und einer ganzen Zahl p, die mindestens einen Primteiler ungleich 2 besitzt.

Daher ist gemäß Anspruch 1 ein Verfahren zum ausspähungsgeschützten Übergang von einer booleschen Maskierung zu einer arithmetischen Maskierung unter Verwendung eines Modulus gleich oder umfassend p, wobei p mindestens einen Primteiler ungleich 2 besitzt, geschaffen.

Bei Ausgestaltungen des erfindungsgemäßen Verfahrens mit Maskieren des Übertrags c1 wird wahlweise der Übertrag c1 mittels der Zufallsinformation pm maskiert, indem der Übertrag c1 mittels einer XOR-Operation mit der Zufallsinformation pm verarbeitet wird zu c1pm = c1 XOR pm, und c1pm als der maskierte Übertrag C_pm verwendet wird, oder aus c1pm als der maskierte Übertrag für die nachfolgenden Rechenschritte C_pm abgeleitet wird.

Bei Ausgestaltungen des erfindungsgemäßen Verfahrens mit Balancieren des Übertrags c1 wird wahlweise der Übertrag c1 mittels einer Zufallsinformation pm balanciert, indem gesteuert durch die Zufallsinformation pm der geheim zu haltende Wert x in der zweiten Maskierung zufallsgesteuert als entweder xr = (x + r) mod ($2^n * p$) oder xr = (x - r) mod ($2^n * p$) dargestellt, wobei der balancierte Übertrag c1 als Übertrag C verwendet wird oder aus dem balancierten Übertrag c1 der Übertrag C abgeleitet werden kann. Hierdurch wird erreicht, dass die Häufigkeit der unterschiedlichen Werte des Übertrags C für alle möglichen Werte von r und pm unabhängig von x ist.

Bei Ausgestaltungen des erfindungsgemäßen Verfahrens mit Maskieren oder/und Balancieren des Übertrags c1 wird wahlweise der Übertrag C_pm bzw. C mit Hilfe einer Zufallszahl z_p, 0<= z_p < p additiv maskiert und anschließend reduziert, wodurch ein Zwischenergebnis sum1zp_p erzeugt wird. Anschließend wird sum1zp_p mit anderen Zwischenergebnissen kombiniert, beispielsweise wie in den nachfolgenden detaillierten Ausführungsbeispielen beschrieben ist.

Das erfindungsgemäße Verfahren ist besonders sinnvoll einsetzbar bei Schlüsselableitungsverfahren, bei denen zwei Parteien jede für sich ein geteiltes Geheimnis ableiten, beispielsweise Diffie-Hellman (DH) oder Elliptische Kurven Diffie Hellman (ECDH), oder ähnliche Verfahren, beispielsweise ECIES oder dergleichen.

Das Verfahren ist insbesondere sinnvoll einsetzbar in maschinenlesbaren Reisedokumenten, wie Reisepässen mit Chip (integriertem Schaltkreis) und einer Schnittstelle, beispielsweise einer Antenne, und beim Auslesen von solchen maschinenlesbaren Reisedokumenten mit Lesegeräten für solche maschinenlesbare Reisedokumente. Die Lesegeräte weisen einen Lesegerät-Schaltkreis und eine mit dem Lesegerät-Schaltkreis gekoppelte oder koppelbare Schnittstelle zur Kommunikation mit maschinenlesbaren Reisedokumenten auf.

Insbesondere ist das Verfahren sinnvoll einsetzbar im PACE-Protokoll zum Auslesen von maschinenlesbaren Reisedokumenten mittels eines Lesegeräts für maschinenlesbare Reisedokumente.

Erfindungsgemäße Schlüsselableitungsverfahren, maschinenlesbare Reisedokumente und Lesegeräte sind eingerichtet für erfindungsgemäße Verfahren.

Detaillierte Beschreibung von Ausführungsbeispielen

Im Detail wird das Schützen des Übertrags c1 insbesondere wahlweise mit folgenden Ausgestaltungen des erfindungsgemäßen Verfahrens erzielt.

1. Balancierung I

Die zweite Maske r wird für ein balanciertes Verfahren iterativ berechnet, gemäß einem Verfahren, das folgende Schritte umfasst:

- Einmaliges Berechnen von MAX_p = $2^n$ mod p und MAX_p2 = $2^n$ + 2*p - MAX_p;
- Auswählen einer Zufallszahl z1, 0 <= z1 < $2^n$, Auswählen einer Zufallszahl z_p, 0 <= z_p < p;

- Auswählen eines Zufallsbit pm zum Balancieren des Übertrags c1, dessen Wert zufallsgesteuert entweder 0 oder 1 ist;
- Ausführen der folgenden Schritte:

  1. $sz1 = z1$ XOR $s$
  2. $xz1 = xs$ XOR $sz1$
  3. $xsz1 = xs$ XOR $z1$
  4. Falls $pm == 0$:

     a. $add1 = sz1 + 2^n$
     b. $sub1c = add1 - z1$

     ansonsten:

     a. $add1 = z1 + 2n$
     b. $sub1c = add1 - sz1$

  5. $c1 = sub1c >> n$
  6. $sub1 = sub1c$ mod $2^n$
  7. $add2 = xsz1 + 2^n$
  8. $sub2c = add2 - xz1$
  9. $c2 = sub2c >> n$
  10. $sub2 = subc2$ mod $2^n$
  11. $xor1 = sub1$ XOR $s$
  12. $r\_low = xor1$ XOR $sub2$
  13. $C = c1$ XOR $c2$
  14. $sum1 = (p - C*MAX\_p)$
  15. $sum1zp = sum1 + z\_p$
  16. $sum1zp\_p = sum1zp$ mod $p$
  17. $p\_z\_p = p - z\_p$
  18. $sum2 = r\_low + sum1zp\_p$
  19. $p\_sum2 = MAX\_p2 - sum2$
  20. Falls $pm == 0$:

      a. $xr = xs + z\_p$
      b. $r = sum2$

      ansonsten:

      a. $xr = xs + p\_z\_p$
      b. $r = p\_sum2$.

## 2. Balancierung II

Die zweite Maske r wird für ein balanciertes Verfahren iterativ berechnet, gemäß einem Verfahren, das folgende Schritte umfasst:

- Einmaliges Berechnen von $MAX\_p = 2^n$ mod $p$ und $MAX\_p2 = 2^n + 2*p - MAX\_p$;
- Auswählen einer Zufallszahl z1, $0 <= z1 < 2^n$, Auswählen einer Zufallszahl z_p, $0 <= z\_p < p$;
- Auswählen eines Zufallsbit pm, dessen Wert zufallsgesteuert entweder 0 oder 1 ist;
- Ausführen der folgenden Schritte:

  1. $sz1 = z1$ XOR $s$

  2. $xz1 = xs$ XOR $sz1$
  3. $xsz1 = xs$ XOR $z1$
  4. Falls $pm == 0$:

     a. $add1 = xz1 + 2^n$
     b. $sub1c = add1 - sz1$

     ansonsten:

     a. $add1 = sz1 + 2^n$
     b. $sub1c = add1 - xz1$

  5. $c1 = sub1c >> n$
  6. $sub1 = sub1c$ mod $2^n$
  7. $add2 = xsz1 + 2^n$
  8. $sub2c = add2 - z1$
  9. $c2 = sub2c >> n$
  10. $sub2 = subc2$ mod $2^n$
  11. $xor1 = sub1$ XOR $xs$
  12. $xr\_low = xor1$ XOR $sub2$
  13. $C = c1$ XOR $c2$
  14. $sum1 = (p - C*MAX\_p)$
  15. $sum1zp = sum1 + z\_p$
  16. $sum1zp\_p = sum1zp$ mod $p$
  17. $p\_z\_p = p - z\_p$
  18. $sum2 = xr\_low + sum1zp\_p$
  19. $p\_sum2 = MAX\_p2 - sum2$
  20. Falls $pm == 0$:

      a. $r = s + p\_z\_p$
      b. $xr = sum2$

      ansonsten:

      a. $r = s + z\_p$
      b. $xr = p\_sum2$.

## 3. Maskierung I

Die zweite Maske r wird iterativ berechnet gemäß einem Verfahren, das folgende Schritte umfasst:

- Einmaliges Berechnen von $MAX\_p = 2^n$ mod $p$ und $MAX\_p2 = 2^n + 2*p - MAX\_p$;
- Auswählen einer Zufallszahl z1, $0 <= z1 < 2^n$, Auswählen einer Zufallszahl z_p, $0 <= z\_p < p$;
- Auswählen eines Zufallsbit pm, dessen Wert zufallsgesteuert entweder 0 oder 1 ist;
- Ausführen der folgenden Schritte, umfassend einen Schritt des Maskierens des Übertrags c1, 14. $c1pm = c1$ XOR $pm$:

  1. $sz1 = z1$ XOR $s$
  2. $xz1 = xs$ XOR $sz1$
  3. $xsz1 = xs$ XOR $z1$
  4. $add1 = sz1 + 2^n$
  5. $sub1c = add1 - z1$
  6. $c1 = sub1c >> n$

7. $sub1 = sub1c \bmod 2^n$

8. $add2 = xsz1 + 2^n$

9. $sub2c = add2 - xz1$

10. $c2 = sub2c \gg n$

11. $sub2 = subc2 \bmod 2^n$

12. $xor1 = sub1 \text{ XOR } s$

13. $r\_low = xor1 \text{ XOR } sub2$

14. $c1pm = c1 \text{ XOR } pm$

15. $C\_pm = c1pm \text{ XOR } c2$

16. $sum1 = (p - C\_pm*MAX\_p)$

17. $sum1zp = sum1 + z\_p$

18. $sum1zp\_p = sum1zp \bmod p$

19. $p\_sum1zp\_p = p - sum1zp\_p$

20. $p\_z\_p = p - z\_p$

21. $r\_low\_p = r\_low + p$

22. $sum2 = r\_low\_p - pm * MAX\_p$

23. Falls $pm == 0$:

    a. $xr = xs + z\_p$

    b. $r = sum2 + sum1zp\_p$

ansonsten:

    a. $xr = xs + p\_z\_p$

    b. $r = sum2 + p\_sum1zp\_p.$

4. Maskierung II

Die zweite Maske r wird iterativ berechnet gemäß einem Verfahren, das folgende Schritte umfasst:

- Einmaliges Berechnen von $MAX\_p = 2^n \bmod p$ und $MAX\_p2 = 2^n + 2*p - MAX\_p$;
- Auswählen einer Zufallszahl z1, $0 <= z1 < 2^n$, Auswählen einer Zufallszahl z_p, $0 <= z\_p < p$;
- Auswählen eines Zufallsbit pm, dessen Wert zufallsgesteuert entweder 0 oder 1 ist;
- Ausführen der folgenden Schritte, umfassend einen Schritt des Maskierens des Übertrags c1, 14. $c1pm = c1 \text{ XOR } pm$:

    1. $sz1 = z1 \text{ XOR } s$

    2. $xz1 = xs \text{ XOR } sz1$

    3. $xsz1 = xs \text{ XOR } z1$

    4. $add1 = xsz1 + 2^n$

    5. $sub1c = add1 - sz1$

    6. $c1 = sub1c \gg n$

    7. $sub1 = sub1c \bmod 2^n$

    8. $add2 = xsz1 + 2^n$

    9. $sub2c = add2 - z1$

    10. $c2 = sub2c \gg n$

    11. $sub2 = subc2 \bmod 2^n$

    12. $xor1 = sub1 \text{ XOR } xs$

    13. **xr_low** $= xor1 \text{ XOR } sub2$

    14. $c1pm = c1 \text{ XOR } pm$

    15. $C\_pm = c1pm \text{ XOR } c2$

    16. $sum1 = (p - C\_pm*MAX\_p)$

    17. $sum1zp = sum1 + z\_p$

    18. $sum1zp\_p = sum1zp \bmod p$

    19. $p\_sum1zp\_p = p - sum1zp\_p$

    20. $p\_z\_p = p - z\_p$

    21. **xr_low_p = xr_low** $+ p$

    22. $sum2 = $ **xr_low_p** $- pm * MAX\_p$

    23. Falls $pm == 0$:

        a. $r = s + p\_z\_p$

        b. **xr** $= sum2 + sum1zp\_p$

    ansonsten:

        a. $r = s + z\_p$

        b. $xr = sum2 + p\_sum1zp\_p.$

Bei allen Ausgestaltungen des Verfahrens kann wahlweise ein zusätzlicher Schritt des modularen Reduzierens des maskierten Werts xr und der Maske r erfolgen, wobei der zusätzliche Schritt 21 auf Schritt 20 folgt, bzw. der zusätzliche Schritt 24 auf Schritt 23 folgt, gemäß:

    a. $xr\_p = xr \bmod p$

    b. $r\_p = r \bmod p$ .

Kurze Beschreibung der Zeichnungen

Im Folgenden wird die Erfindung an Hand von Ausführungsbeispielen und unter Bezugnahme auf die Zeichnungen näher erläutert, in der zeigen:

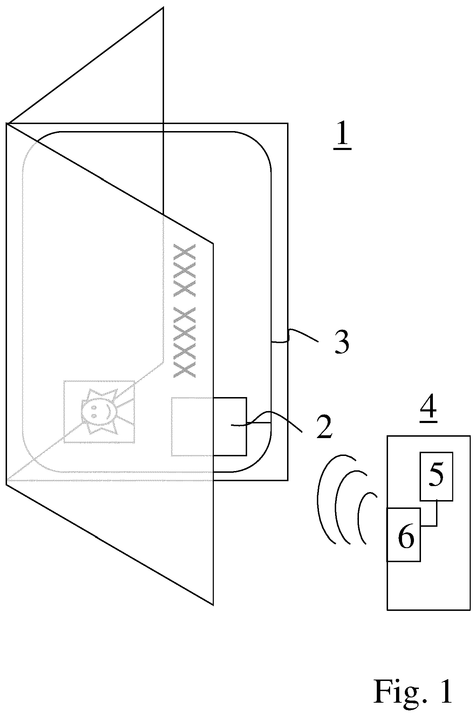

Fig. 1 ein System zur Veranschaulichung der Erfindung.

Detaillierte Beschreibung von Ausführungsbeispielen

Fig. 1 zeigt ein maschinenlesbares Reisedokument 1 mit einem integrierten Schaltkreis 2 und einer Schnittstelle in Gestalt einer Antenne 3, die an den integrierten Schaltkreis 2 angekoppelt oder ankoppelbar ist. Der integrierte Schaltkreis 2 ist für das PACE-Protokoll eingerichtet. Das PACE-Protokoll umfasst ein Schlüsselableitungsverfahren, in welches das erfindungsgemäße Verfahren integriert ist. Das maschinenlesbare Reisedokument 1 lässt sich mit einem entsprechend eingerichteten Lesegerät 4 auslesen, das einen Lesegerät-Schaltkreis 5 und eine Schnittstelle 6, z.B. eine entsprechende Antenne, aufweist. Derartige Lesegeräte 4 für maschinenlesbare Reisedokument wie das maschinenlesbare Reisedokument 1 sind beispielsweise an Kontrollstationen wie Flughäfen oder Grenzübergängen angeordnet.

**Patentansprüche**

**1.** Verfahren zur ausspähungsgeschützten Ummaskierung eines geheim zu haltenden Wertes x von einer ersten Maskierung zu einer zweiten Maskierung, durch Durchführung einer Mehrzahl von aufeinanderfolgenden Rechenschritten, wobei der geheim zu haltende Wert x:

- vor der Durchführung der Mehrzahl von aufeinanderfolgenden Rechenschritte in der ersten Maskierung als eine gemäß einer booleschen Maskierungsregel $xs = x$ XOR $s$ mod $2^n$ mit einer ersten Maske $s$ maskierte erste Repräsentation $xs$ vorliegt, wobei $2^n$ der Modulus der ersten Maskierungsregel ist, wobei $n$ eine ganze Zahl ist, und

- nach der Durchführung der Mehrzahl von aufeinanderfolgenden Rechenschritte in der zweiten Maskierung als eine gemäß einer arithmetischen Maskierungsregel mit einer zweiten Maske $r$ maskierte zweite Repräsentation $xr$ vorliegt, **dadurch gekennzeichnet, dass:**

- $xr = (x+r)$ mod $( 2^m *p )$ oder $xr = (x-r)$ mod $( 2^m *p )$, wobei $( 2^m *p )$ der Modulus der zweiten Maskierungsregel ist und $m$ eine ganze Zahl größer gleich null ist, wobei $p$ mindestens einen Primteiler ungleich 2 besitzt; und

- bei der Ummaskierung mindestens ein arithmetischer Rechenschritt durchgeführt wird, bei dem ein Übertrag $c1$ über $2^n$ erzeugt wird, wobei der Übertrag $c1$ gegen Ausspähung geschützt wird, indem der Übertrag $c1$ mittels einer Zufallsinformation $pm$ maskiert oder balanciert wird, und in einem nachfolgenden Rechenschritt, in dem der Übertrag $c1$ zur Verwendung vorgesehen ist, an Stelle des Übertrags der maskierte Übertrag $C\_pm$ oder der balancierte Übertrag $C$ verwendet wird.

**2.** Verfahren nach Anspruch 1, wobei der Übertrag $c1$ mittels der Zufallsinformation $pm$ maskiert wird, indem der Übertrag $c1$ mittels einer XOR-Operation mit der Zufallsinformation $pm$ verarbeitet wird zu $c1pm = c1$ XOR $pm$, und $c1pm$ als der maskierte Übertrag $C\_pm$ verwendet wird, oder aus $c1pm$ der maskierte Übertrag $C\_pm$ abgeleitet wird.

**3.** Verfahren nach Anspruch 1, wobei der Übertrag $c1$ mittels einer Zufallsinformation $pm$ balanciert wird, indem gesteuert durch die Zufallsinformation $pm$ der geheim zu haltende Wert x in der zweiten Maskierung zufallsgesteuert als entweder $xr = (x + r)$ mod $( 2^n*p )$ oder $xr = (x - r)$ mod $(2^n*p )$ dargestellt wird, wobei der balancierte Übertrag $c1$ als Übertrag $C$ verwendet wird oder aus dem balancierten Übertrag $c1$ der Übertrag $C$ abgeleitet werden kann.

**4.** Verfahren nach Anspruch 2 oder 3, wobei der Übertrag $C\_pm$ bzw. $C$ mit Hilfe einer Zufallszahl $z\_p$, $0 <= z\_p < p$, additiv maskiert wird und anschließend reduziert wird, wodurch ein Zwischenergebnis $sum1zp\_p$ erzeugt wird, und wobei in nachfolgenden Schritten mit dem Zwischenergebnis $sum1zp\_p$

statt mit dem Übertrag $C\_pm$ bzw. $C$ weitergerechnet wird.

**5.** Verfahren nach Anspruch 4 in Verbindung mit 3, wobei die zweite Maske $r$ iterativ berechnet wird gemäß einem Verfahren, das folgende Schritte umfasst:

- Einmaliges Berechnen von $MAX\_p = 2^n$ mod $p$ und $MAX\_p2 = 2^n + 2*p - MAX\_p$;
- Auswählen einer Zufallszahl $z1$, $0 <= z1 < 2^n$, Auswählen einer Zufallszahl $z\_p$, $0 <= z\_p < p$;
- Auswählen eines Zufallsbit $pm$, dessen Wert zufallsgesteuert entweder 0 oder 1 ist;
- Ausführen der folgenden Schritte:

1. $sz1 = z1$ XOR $s$
2. $xz1 = xs$ XOR $sz1$
3. $xsz1 = xs$ XOR $z1$
4. Falls $pm == 0$:

   a. $add1 = sz1 + 2^n$
   b. $sub1c = add1 - z1$

   ansonsten:

   a. $add1 = z1 + 2^n$
   b. $sub1c = add1 - sz1$

5. $c1 = sub1c >> n$
6. $sub1 = sub1c$ mod $2^n$
7. $add2 = xsz1 + 2^n$
8. $sub2c = add2 - xz1$
9. $c2 = sub2c \gg n$
10. $sub2 = subc2$ mod $2^n$
11. $xor1 = sub1$ XOR $s$
12. $r\_low = xor1$ XOR $sub2$
13. $C = c1$ XOR $c2$
14. $sum1 = (p - C*MAX\_p)$
15. $sum1zp = sum1 + z\_p$
16. $sum1zp\_p = sum1zp$ mod $p$
17. $p\_z\_p = p - z\_p$
18. $sum2 = r\_low + sum1zp\_p$
19. $p\_sum2 = MAX\_p2 - sum2$
20. Falls $pm == 0$:

    a. $xr = xs + z\_p$
    b. $r = sum2$

    ansonsten:

    a. $xr = xs + p\_z\_p$
    b. $r = p\_sum2$.

**6.** Verfahren nach Anspruch 4 in Verbindung mit 3, wobei die zweite Maske $r$ iterativ berechnet wird gemäß einem Verfahren, das folgende Schritte umfasst:

- Einmaliges Berechnen von MAX_p = $2^n$ mod p und MAX_p2 = $2^n$ + 2*p - MAX_p;
- Auswählen einer Zufallszahl z1, 0 <= z1 < $2^n$, Auswählen einer Zufallszahl z_p, 0 <= z_p < p;
- Auswählen eines Zufallsbit pm, dessen Wert zufallsgesteuert entweder 0 oder 1 ist;
- Ausführen der folgenden Schritte:

1. sz1 = z1 XOR s
2. xz1 = xs XOR sz1
3. xsz1 = xs XOR z1
4. Falls pm == 0:

   a. add1 = xz1 + $2^n$
   b. sub1c= add1 - sz1

   ansonsten:

   a. add1 = **sz1** + $2^n$
   b. sub1c= add1 - xz1

5. c1 = sub1c >> n
6. sub1 = sub1c mod $2^n$
7. add2 = xsz1 + $2^n$
8. sub2c = add2 - z1
9. c2 = sub2c >> n
10. sub2 = subc2 mod $2^n$
11. xor1 = sub1 XOR xs
12. **xr_low** = xor1 XOR sub2
13. C = c1 XOR c2
14. sum1 = (p - C*MAX_p)
15. sum1zp = sum1 + z_p
16. sum1zp_p = sum1zp mod p
17. p_z_p = p - z_p
18. sum2 = **xr_low** + sum1zp_p
19. p_sum2 = MAX_p2 - sum2
20. Falls pm == 0:

    a. r = s + p_z_p
    b. xr = sum2

    ansonsten:

    a. **r = s + z_p**
    b. xr = p_sum2.

7. Verfahren nach Anspruch 4 in Verbindung mit 2, wobei die zweite Maske r iterativ berechnet wird gemäß einem Verfahren, das folgende Schritte umfasst:

   - Einmaliges Berechnen von MAX_p = $2^n$ mod p und MAX_p2 = $2^n$ + 2*p - MAX_p;
   - Auswählen einer Zufallszahl z1, 0 <= z1 < $2^n$, Auswählen einer Zufallszahl z_p, 0 <= z_p < p;
   - Auswählen eines Zufallsbit pm, dessen Wert zufallsgesteuert entweder 0 oder 1 ist;
   - Ausführen der folgenden Schritte, umfassend einen Schritt des Maskierens des Übertrags c1, 14. c1pm = c1 XOR pm:

1. sz1 = z1 XOR s
2. xz1 = xs XOR sz1
3. xsz1 = xs XOR z1
4. add1 = sz1 + $2^n$
5. sub1c = add1 - z1
6. c1 = sub1c >> n
7. sub1 = sub1c mod $2^n$
8. add2 = xsz1 + $2^n$
9. sub2c = add2 - xz1
10. c2 = sub2c » n
11. sub2 = subc2 mod $2^n$
12. xor1 = sub1 XOR s
13. r_low = xor1 XOR sub2
14. c1pm = c1 XOR pm
15. C_pm = c1pm XOR c2
16. sum1 = (p - C_pm*MAX_p)
17. sum1zp = sum1 + z_p
18. sum1zp_p = sum1zp mod p
19. p_sum1zp_p = p - sum1zp_p
20. p_z_p = p - z_p
21. r_low_p = r_low + p
22. sum2 = r_low_p - pm * MAX_p
23. Falls pm == 0:

    a. xr = xs + z_p
    b. r = sum2 + sum1zp_p

    ansonsten:

    a. xr = xs + p_z_p
    b. r = sum2 + p_sum1zp_p.

8. Verfahren nach Anspruch 4 in Verbindung mit 2, wobei die zweite Maske r iterativ berechnet wird gemäß einem Verfahren, das folgende Schritte umfasst:

   - Einmaliges Berechnen von MAX_p = $2^n$ mod p und MAX_p2 = $2^n$ + 2*p - MAX_p;
   - Auswählen einer Zufallszahl z1, 0 <= z1 < $2^n$, Auswählen einer Zufallszahl z_p, 0 <= z_p < p;
   - Auswählen eines Zufallsbit pm, dessen Wert zufallsgesteuert entweder 0 oder 1 ist;
   - Ausführen der folgenden Schritte, umfassend einen Schritt des Maskierens des Übertrags c1, 14. c1pm = c1 XOR pm:

   1. sz1 = z1 XOR s
   2. xz1 = xs XOR sz1
   3. xsz1 = xs XOR z1
   4. add1 = xsz1 + $2^n$
   5. sub1c = add1 - sz1
   6. c1 = sub1c >> n
   7. sub1 = sub1c mod $2^n$
   8. add2 = xsz1 + $2^n$

9. sub2c = add2 - z1
10. c2 = sub2c >> n
11. sub2 = subc2 mod $2^n$
12. xor1 = sub1 XOR xs
13. **xr_low** = xor1 XOR sub2
14. c1pm = c1 XOR pm
15. C_pm = c1pm XOR c2
16. sum1 = (p - C_pm*MAX_p)
17. sum1zp = sum1 + z_p
18. sum1zp_p = sum1zp mod p
19. p_sum1zp_p = p - sum1zp_p
20. p_z_p = p - z_p
21. **xr_low_p** = **xr_low** + p
22. sum2 = **xr_low_p** - pm * MAX_p
23. Falls pm == 0:

   a. **r = s + p_z_p**
   b. xr = sum2 + sum1zp_p

ansonsten:

   a. **r = s + z_p**
   b. xr = sum2 + p_sum1zp_p .

9. Verfahren nach einem der Ansprüche 5 bis 8, umfassend den weiteren Schritt, im Fall von Anspruch 5 oder 6 Schritt 21., bzw. im Fall von Anspruch 7 oder 8 Schritt 24., modulares Reduzieren des maskierten Werts xr und der Maske r gemäß

   a. xr_p = xr mod p
   b. r_p = r mod p .

10. Schlüsselableitungsverfahren, gestaltet als DH- oder ECDH-Schlüsselableitungsverfahren, umfassend ein Verfahren nach einem der Ansprüche 1 bis 9.

11. Maschinenlesbares Reisedokument (1), umfassend einen integrierten Schaltkreis (2), der für ein Schlüsselableitungsverfahren nach Anspruch 10 eingerichtet ist, und eine Schnittstelle (3) zur Kommunikation mit einem Lesegerät (4).

**Claims**

1. Method for intrusion-resistant remasking of a value x to be kept secret from a first masking to a second masking, by carrying out a plurality of successive calculation steps, wherein the value x to be kept secret:

   - exists in the first masking, before the execution of the plurality of successive calculation steps, as a first representation xs masked with a first mask s according to a Boolean masking rule xs = x XOR s mod $2^n$, where $2^n$ is the modulus of the first masking rule, where n is an integer, and
   - exists in the second masking, after the execution of the plurality of successive calculation steps, as a second representation xr masked with a second mask r according to an arithmetic masking rule, **characterized in that**:

      - xr = (x+r) mod ( $2^m$ *p ) or xr = (x-r) mod ( $2^m$ *p ), where ( $2^m$ *p ) is the modulus of the second masking rule and m is an integer greater than or equal to zero, where p has at least one prime divisor unequal to 2; and
      - during the remasking, at least one arithmetic calculation step is carried out, in which a carry c1 is generated over $2^n$, the carry c1 being protected against intrusion attacks by masking or balancing the carry c1 by means of a random information item pm, and in a subsequent calculation step in which the carry c1 is intended for use, the masked carry C_pm or the balanced carry C is used instead of the carry.

2. Method according to Claim 1, wherein the carry c1 is masked by means of the random information pm, by processing the carry c1 by means of an XOR operation with the random information pm to clpm = c1 XOR pm, and clpm is used as the masked carry C_pm, or the masked carry C_pm is derived from clpm.

3. Method according to Claim 1, wherein the carry c1 is balanced by means of a random information item pm, by representing the value x to be kept secret in the second masking as either xr = (x + r) mod ( $2^n$*p ) or xr = (x - r) mod ($2^n$*p ), selected at random under the control of the random information pm, wherein the balanced carry c1 is used as the carry C or the carry C can be derived from the balanced carry c1.

4. Method according to Claim 2 or 3, wherein the carry C_pm or C by means of a random number z_p, 0<= z_p < p, is additively masked and then reduced, whereby an intermediate result sum1zp_p is generated, and wherein in subsequent steps further calculations use the intermediate result sum1zp_p instead of the carry C_pm or C.

5. Method according to Claim 4, in conjunction with 3, wherein the second mask r is iteratively calculated according to a procedure comprising the following steps:

   - calculating MAX_p = $2^n$ mod p and MAX_p2 = $2^n$ + 2*p - MAX_p once only;
   - selecting a random number z1, 0 <= z1 < $2^n$, selecting a random number z_p, 0 <= z_p < p;
   - selecting a random bit pm, the value of which is randomly controlled as either 0 or 1;
- performing the following steps:

    1. sz1 = z1 XOR s
    2. xz1 = xs XOR sz1
    3. xsz1 = xs XOR z1
    4. If pm == 0:

        a. add1 = sz1 + $2^n$
        b. sub1c= add1 - z1

    else:

        a. add1 = z1 + $2^n$
        b. sub1c= add1 - sz1

    5. c1 = sub1c >> n
    6. sub1 = sub1c mod $2^n$
    7. add2 = xsz1 + $2^n$
    8. sub2c = add2 - xz1
    9. c2 = sub2c >> n
    10. sub2 = subc2 mod $2^n$
    11. xor1 = sub1 XOR s
    12. r_low = xor1 XOR sub2
    13. C = c1 XOR c2
    14. sum1 = (p - C*MAX_p)
    15. sum1zp = sum1 + z_p
    16. sum1zp_p = sum1zp mod p
    17. p_z_p = p - z_p
    18. sum2 = r_low + sum1zp_p
    19. p_sum2 = MAX_p2 - sum2
    20. If pm == 0:

        a. xr = xs + z_p
        b. r = sum2

    else:

        a. xr = xs + p_z_p
        b. r = p_sum2.

6. Method according to Claim 4, in conjunction with 3, wherein the second mask r is iteratively calculated according to a procedure comprising the following steps:

    - calculating MAX_p = $2^n$ mod p and MAX_p2 = $2^n$ + 2*p - MAX_p once only;
    - selecting a random number z1, 0 <= z1 < $2^n$, selecting a random number z_p, 0 <= z_p < p;
    - selecting a random bit pm, the value of which is randomly controlled as either 0 or 1;
    - performing the following steps:

    1. sz1 = z1 XOR s
    2. xz1 = xs XOR sz1
    3. xsz1 = xs XOR z1
    4. If pm == 0:

        a. add1 = xz1 + $2^n$
        b. sub1c= add1 - sz1

    else:

        a. add1 = sz1 + $2^n$
        b. sub1c= add1 - xz1

    5. c1 = sub1c >> n
    6. sub1 = sub1c mod $2^n$
    7. add2 = xsz1 + $2^n$
    8. sub2c = add2 - z1
    9. c2 = sub2c >> n
    10. sub2 = subc2 mod $2^n$
    11. xor1 = sub1 XOR xs
    12. xr_low = xor1 XOR sub2
    13. C = c1 XOR c2
    14. sum1 = (p - C*MAX_p)
    15. sumlzp = sum1 + z_p
    16. sumlzp_p = sumlzp mod p
    17. p_z_p = p - z_p
    18. sum2 = xr_low + sum1zp_p
    19. p_sum2 = MAX_p2 - sum2
    20. If pm == 0:

        a. r = s + p_z_p
        b. xr = sum2

    else:

        a. r = s + z_p
        b. xr = p_sum2.

7. Method according to Claim 4, in conjunction with 2, wherein the second mask r is iteratively calculated according to a procedure comprising the following steps:

    - calculating MAX_p = $2^n$ mod p and MAX_p2 = $2^n$ + 2*p - MAX_p once only;
    - selecting a random number z1, 0 <= z1 < $2^n$, selecting a random number z_p, 0 <= z_p < p;
    - selecting a random bit pm, the value of which is randomly controlled as either 0 or 1;
    - performing the following steps, comprising a step of masking the carry c1, 14. clpm = c1 XOR pm:

    1. sz1 = z1 XOR s
    2. xz1 = xs XOR sz1
    3. xsz1 = xs XOR z1
    4. add1 = sz1 + $2^n$
    5. sub1c = add1 - z1
    6. c1 = sub1c >> n
    7. sub1 = sub1c mod $2^n$
    8. add2 = xsz1 + $2^n$
    9. sub2c = add2 - xz1
    10. c2 = sub2c >> n

11. sub2 = subc2 mod $2^n$

12. xor1 = sub1 XOR s

13. r_low = xor1 XOR sub2

14. clpm = c1 XOR pm

15. C_pm = clpm XOR c2

16. sum1 = (p - C_pm*MAX_p)

17. sum1zp = sum1 + z_p

18. sum1zp_p = sum1zp mod p

19. p_ sum1zp_p = p - sum1zp_p

20. p_z_p = p - z_p

21. r_low_p = r_low + p

22. sum2 = r_low_p - pm * MAX_p

23. If pm == 0:

    a. xr = xs + z_p

    b. r = sum2 + sum1zp_p

    else:

    a. xr = xs + p_z_p

    b. r = sum2 + p_sum1zp_p.

**8.** Method according to Claim 4, in conjunction with 2, wherein the second mask r is iteratively calculated according to a procedure comprising the following steps:

- calculating MAX_p = $2^n$ mod p and MAX_p2 = $2^n$ + 2*p - MAX_p once only;
- selecting a random number z1, 0 <= z1 < $2^n$, selecting a random number z_p, 0 <= z_p < p;
- selecting a random bit pm, the value of which is randomly controlled as either 0 or 1;
- performing the following steps, comprising a step of masking the carry c1, 14. clpm = c1 XOR pm:

    1. sz1 = z1 XOR s

    2. xz1 = xs XOR sz1

    3. xsz1 = xs XOR z1

    4. add1 = xsz1 + $2^n$

    5. sub1c = add1 - sz1

    6. c1 = sub1c >> n

    7. sub1 = sub1c mod $2^n$

    8. add2 = xsz1 + $2^n$

    9. sub2c = add2 - z1

    10. c2 = sub2c >> n

    11. sub2 = subc2 mod $2^n$

    12. xor1 = sub1 XOR xs

    13. xr_low = xor1 XOR sub2

    14. clpm = c1 XOR pm

    15. C_pm = clpm XOR c2

    16. sum1 = (p - C_pm*MAX_p)

    17. sum1zp = sum1 + z_p

    18. sum1zp_p = sum1zp mod p

    19. p_ sum1zp_p = p - sum1zp_p

    20. p_z_p = p - z_p

    21. xr_low_p = xr_low + p

    22. sum2 = xr_low_p - pm * MAX_p

    23. If pm == 0:

        a. r = s + p_z_p

        b. xr = sum2 + sum1zp_p

        else:

        a. r = s + z_p

        b. xr = sum2 + p_sum1zp_p.

**9.** Method according to any of Claims 5 to 8, comprising the further step, in the case of Claim 5 or 6, step 21, or in the case of Claim 7 or 8, step 24, of performing a modular reduction of the masked value xr and the mask r according to

    a. xr_p = xr mod p

    b. r_p = r mod p.

**10.** Key-derivation method, designed as a DH or ECDH key-derivation method, comprising a method according to any of Claims 1 to 9.

**11.** Machine-readable travel document (1) comprising an integrated circuit (2), which is configured for a key-derivation method according to Claim 10, and an interface (3) for communication with a reader (4).

## Revendications

**1.** Procédé de changement de masque protégé contre l'espionnage d'une valeur x à garder secrète, d'un premier masquage à un second masquage, par exécution d'une pluralité d'étapes de calcul successives, dans lequel la valeur x à garder secrète :

- se présente, avant l'exécution de la pluralité d'étapes de calcul successives dans le premier masquage, sous la forme d'une première représentation xs masquée avec un premier masque s selon une règle de masquage booléenne xs = x XOR s mod $2^n$, où $2^n$ est le module de la première règle de masquage, n étant un entier, et
- se présente, après l'exécution de la pluralité d'étapes de calcul successives dans le second masquage, sous la forme d'une seconde représentation xr masquée avec un second masque r selon une règle de masquage arithmétique, **caractérisé en ce que** :

- xr = (x+r) mod ($2^m$ *p) ou xr = (x-r) mod ($2^m$ *p), où ($2^m$ *p) est le module de la seconde règle de masquage et m est un nombre entier supérieur ou égal à zéro, p possédant au moins un diviseur premier différent de 2 ; et

- lors du changement de masque, au moins une étape de calcul arithmétique est exécutée, au cours de laquelle un report c1 supérieur à $2^n$ est généré, le report c1 étant protégé contre l'espionnage par masquage ou équilibrage du report c1 au moyen d'une information aléatoire pm, et, lors d'une étape de calcul suivante dans laquelle il est prévu d'utiliser le report c1, le report masqué C_pm ou le report équilibré C est utilisé au lieu dudit report.

2. Procédé selon la revendication 1, dans lequel le report c1 est masqué au moyen de l'information aléatoire pm par traitement du report c1 par une opération XOR avec l'information aléatoire pm pour obtenir clpm = c1 XOR pm, et clpm est utilisé en tant que report masqué C_pm, ou le report masqué C_pm est dérivé de clpm .

3. Procédé selon la revendication 1, dans lequel le report c1 est équilibré au moyen d'une information aléatoire pm en ce que, sous la commande de l'information aléatoire pm, la valeur x à garder secrète dans le second masquage est représentée de manière commandée de façon aléatoire soit sous la forme xr = (x + r) mod ($2^n$*p), soit sous la forme xr = (x - r) mod ($2^n$*p), le report équilibré c1 étant utilisé en tant que report C ou le report C pouvant être dérivé du report équilibré c1.

4. Procédé selon la revendication 2 ou 3, dans lequel le report C_pm ou C est masqué de manière additive à l'aide d'un nombre aléatoire z_p, 0 <= z_p < p, puis est réduit, de sorte qu'un résultat intermédiaire sum1zp_p est généré, et dans lequel, lors d'étapes suivantes, le calcul se poursuit avec le résultat intermédiaire sum1zp_p au lieu du report C_pm ou C.

5. Procédé selon la revendication 4 en liaison avec la revendication 3, dans lequel le second masque r est calculé de manière itérative selon un procédé comprenant les étapes suivantes :

- calcul unique de MAX_p = $2^n$ mod p et MAX_p2 = $2^n$ + 2*p - MAX_p ;
- sélection d'un nombre aléatoire z1, 0 <= z1 < $2^n$, sélection d'un nombre aléatoire z_p, 0 <= z_p < p ;
- sélection d'un bit aléatoire pm dont la valeur est commandée de manière aléatoire soit à 0, soit à 1 ;
- exécution des étapes suivantes :

    1. sz1 = z1 XOR s
    2. xz1 = xs XOR sz1
    3. xsz1 = xs XOR z1
    4. si pm == 0 :

        a. add1 = sz1 + $2^n$
        b. sub1c= add1 - z1

    sinon :

        a. add1 = z1 + $2^n$
        b. sub1c= add1 - sz1

    5. c1 = sub1c >> n
    6. sub1 = sub1c mod $2^n$
    7. add2 = xsz1 + $2^n$
    8. sub2c = add2 - xz1
    9. c2 = sub2c >> n
    10. sub2 = subc2 mod $2^n$
    11. xor1 = sub1 XOR s
    12. r_low = xor1 XOR sub2
    13. C = c1 XOR c2
    14. sum1 = (p - C*MAX_p)
    15. sumlzp = sum1 + z_p
    16. sum1zp_p = sumlzp mod p
    17. p_z_p = p - z_p
    18. sum2 = r_low + sum1zp_p
    19. p_sum2 = MAX_p2 - sum2
    20. si pm == 0 :

        a. xr = xs + z_p
        b. r = sum2

    sinon :

        a. xr = xs + p_z_p
        b. r = p_sum2.

6. Procédé selon la revendication 4 en liaison avec la revendication 3, dans lequel le second masque r est calculé de manière itérative selon un procédé comprenant les étapes suivantes :

- calcul unique de MAX_p = $2^n$ mod p et MAX_p2 = $2^n$ + 2*p - MAX_p ;
- sélection d'un nombre aléatoire z1, 0 <= z1 < $2^n$, sélection d'un nombre aléatoire z_p, 0 <= z_p < p ;
- sélection d'un bit aléatoire pm dont la valeur est commandée de manière aléatoire soit à 0, soit à 1 ;
- exécution des étapes suivantes :

    1. sz1 = z1 XOR s
    2. xz1 = xs XOR sz1
    3. xsz1 = xs XOR z1
    4. si pm == 0 :

        a. add1 = xz1 + $2^n$
        b. sub1c= add1 - sz1

    sinon :

a. add1 = sz1 + $2^n$
b. sub1c= add1 - xz1

5. c1 = sub1c >> n
6. sub1 = sub1c mod $2^n$
7. add2 = xsz1 + $2^n$
8. sub2c = add2 - z1
9. c2 = sub2c >> n
10. sub2 = subc2 mod $2^n$
11. xor1 = sub1 XOR xs
12. xr_low = xor1 XOR sub2
13. C = c1 XOR c2
14. sum1 = (p - C*MAX_p)
15. sumlzp = sum1 + z_p
16. sumlzp_p = sumlzp mod p
17. p_z_p = p - z_p
18. sum2 = xr_low + sum1zp_p
19. p_sum2 = MAX_p2 - sum2
20. si pm == 0 :

a. r = s + p_z_p
b. xr = sum2

sinon :

a. r = s + z_p
b. xr = p_sum2.

7. Procédé selon la revendication 4 en liaison avec la revendication 2, dans lequel le second masque r est calculé de manière itérative selon un procédé comprenant les étapes suivantes :

- calcul unique de MAX_p = $2^n$ mod p et MAX_p2 = $2^n$ + 2*p - MAX_p ;
- sélection d'un nombre aléatoire z1, 0 <= z1 < $2^n$, sélection d'un nombre aléatoire z_p, 0 <= z_p < p ;
- sélection d'un bit aléatoire pm dont la valeur est commandée de manière aléatoire soit à 0, soit à 1 ;
- exécution des étapes suivantes, comprenant une étape de masquage du report c1, 14. clpm = c1 XOR pm :

1. sz1 = z1 XOR s
2. xz1 = xs XOR sz1
3. xsz1 = xs XOR z1
4. add1 = sz1 + $2^n$
5. sub1c = add1 - z1
6. c1 = sub1c >> n
7. sub1 = sub1c mod $2^n$
8. add2 = xsz1 + $2^n$
9. sub2c = add2 - xz1
10. c2 = sub2c >> n
11. sub2 = subc2 mod $2^n$
12. xor1 = sub1 XOR s
13. r_low = xor1 XOR sub2

14. clpm = c1 XOR pm
15. C_pm = clpm XOR c2
16. sum1 = (p - C_pm*MAX_p)
17. sumlzp = sum1 + z_p
18. sum1zp_p = sumlzp mod p
19. p_sum1zp_p = p - sum1zp_p
20. p_z_p = p - z_p
21. r_low_p = r_low + p
22. sum2 = r_low_p - pm * MAX_p
23. si pm == 0 :

a. xr = xs + z_p
b. r = sum2 + sum1zp_p

sinon :

a. xr = xs + p_z_p
b. r = sum2 + p_sum1zp_p.

8. Procédé selon la revendication 4 en liaison avec la revendication 2, dans lequel le second masque r est calculé de manière itérative selon un procédé comprenant les étapes suivantes :

- calcul unique de MAX_p = $2^n$ mod p et MAX_p2 = $2^n$ + 2*p - MAX_p ;
- sélection d'un nombre aléatoire z1, 0 <= z1 < $2^n$, sélection d'un nombre aléatoire z_p, 0 <= z_p < p ;
- sélection d'un bit aléatoire pm dont la valeur est commandée de manière aléatoire soit à 0, soit à 1 ;
- exécution des étapes suivantes, comprenant une étape de masquage du report c1, 14. clpm = c1 XOR pm :

1. sz1 = z1 XOR s
2. xz1 = xs XOR sz1
3. xsz1 = xs XOR z1
4. add1 = xsz1 + $2^n$
5. sub1c = add1 - sz1
6. c1 = sub1c >> n
7. sub1 = sub1c mod $2^n$
8. add2 = xsz1 + $2^n$
9. sub2c = add2 - z1
10. c2 = sub2c >> n
11. sub2 = subc2 mod $2^n$
12. xor1 = sub1 XOR xs
13. xr_low = xor1 XOR sub2
14. clpm = c1 XOR pm
15. C_pm = clpm XOR c2
16. sum1 = (p - C_pm*MAX_p)
17. sumlzp = sum1 + z_p
18. sum1zp_p = sumlzp mod p
19. p_sum1zp_p = p - sum1zp_p
20. p_z_p = p - z_p
21. xr_low_p = xr_low + p
22. sum2 = xr_low_p - pm * MAX_p

23. si pm == 0 :

    a. r = s + p_z_p
    b. xr = sum2 + sum1zp_p

sinon :

    a. r = s + z_p
    b. xr = sum2 + p_sum1zp_p.

**9.** Procédé selon l'une des revendications 5 à 8, comprenant l'étape suivante consistant, dans le cas de la revendication 5 ou 6 à l'étape 21., ou dans le cas de la revendication 7 ou 8 à l'étape 24., à réduire de manière modulaire la valeur masquée xr et le masque r selon

    a. xr_p = xr mod p
    b. r_p = r mod p.

**10.** Procédé de dérivation de clé, conçu comme un procédé de dérivation de clé DH ou ECDH, comprenant un procédé selon l'une des revendications 1 à 9.

**11.** Document de voyage lisible par machine (1), comprenant un circuit intégré (2) qui est configuré pour un procédé de dérivation de clé selon la revendication 10, et une interface (3) pour la communication avec un lecteur (4).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02065692 A1
- EP 1596527 B1
- DE 102020000814 A1
- US 20150172042 A1

- US 20150110266 A1
- DE 102004052196 A1
- DE 102017002153 A1

**In der Beschreibung aufgeführte Nicht-Patentliteratur**

- A Sound Method for Switching between Boolean and Arithmetic Masking. **GOUBIN, L.** CHES 2001, Lecture Notes in Computer Sciense. Springer-Verlag, 2001, vol. 2162, 3-15